# EUROPEAN PATENT APPLICATION

(11) **EP 1 710 747 A1**
(43) Date of publication of application: **11.10.2006**
(21) Application number: 05704381.2
(22) Date of filing: 27.01.2005
(51) Int. Cl.: G06T 1/00, G06T 11/00

(54) **METHOD FOR EXTRACTING PERSON CANDIDATE AREA IN IMAGE, PERSON CANDIDATE AREA EXTRACTION SYSTEM, PERSON CANDIDATE AREA EXTRACTION PROGRAM, METHOD FOR JUDGING TOP AND BOTTOM OF PERSON IMAGE, SYSTEM FOR JUDGING TOP AND BOTTOM, AND PROGRAM FOR JUDGING TOP AND BOTTOM**

(30) Priority: 27.01.2004 JP 2004018376
(71) Applicant: SEIKO EPSON CORPORATION, Shinjuku-ku, Tokyo 163-0811 (JP)
(72) Inventor: NAGAHASHI, Toshinori, Suwa-Shi, Nagano 3928502 (JP); HYUGA, Takashi, Suwa-Shi, Nagano 3928502 (JP)
(74) Representative: HOFFMANN EITLE
(86) International application number: PCT/JP2005/001568
(87) International publication number: WO 2005/071611

(57) **Abstract**

The top-bottom direction of a picture image containing a human image'are discerned. Based on the result of the discernment, the human image is modified to the actual top-bottom direction. Then, the dispersion values of image-characterizing amounts are found about vertical and horizontal lines consisting of vertical and horizontal rows of pixels constituting the picture image. Regions having dispersion values of image-characterizing amounts in excess of their threshold values are selected about the vertical and horizontal line directions. An area within the picture image in which the selected regions in the line directions overlap with each other is extracted. Thus, an area within the picture image in which the human image exists can be extracted robustly and quickly.

## Description

### [Technical Field]

The present invention relates to pattern recognition and object recognition technique and, more particularly, to a method of extracting a candidate human image region from within a picture image, a system for extracting the candidate human image region, a program for extracting the candidate human image region, a method of discerning the top and bottom of a human image, a system for discerning the top and bottom, and a program for discerning the top and bottom in order to discern the top and bottom of a picture image containing a human image and to extract a region in which a person is highly likely to be present from within the picture image.

### [Background Art]

In recent years, as pattern recognition technology and information-processing apparatus such as computers have improved in performance, the accuracy at which characters and voice are recognized by machines has improved at an amazing rate. It is known, however, that it is still difficult to recognize persons, objects, and scenes within images taken, for example, by a still image camera by pattern recognition technology, and that it is especially quite difficult to recognize precisely and quickly whether a human face is contained in such an image.

However, it has become quite important to recognize whether a human face is contained in such an image and to identify who is in the picture precisely and automatically using a computer or the like in establishing the biometric recognition technology, improving the security, speeding up criminal investigations, increasing the rates at which image data are put in order, and speeding up search operations.

In order to establish a face recognition technique that is quite useful in future in this way, a technique for detecting a region within a detected image in which a human face exists as quickly as possible and precisely and identifying the region is necessary.

For example, in Patent Reference 1 given below and so on, a region of flesh color within an image is first extracted. Mosaic data is created according to the extracted region and compared with an image dictionary. The degree of similarity is calculated. Thus, a facial image region is detected.
[Patent Reference 1] JP-A-H9-50528

### [Disclosure of the Invention]

To solve the foregoing problem, a method of extracting a candidate human image region from within a picture image in accordance with invention 1 is a method of extracting a region in which the human image exists from within the picture image containing the human image. The method starts with finding the dispersion values of image-characterizing amounts about vertical and horizontal lines, respectively, consisting of vertical and horizontal rows of pixels constituting the picture image. Regions having dispersion values of image-characterizing amounts in excess of their threshold values are selected about the vertical and horizontal line directions, respectively. An area within the picture image in which the selected regions in the line directions overlap with each other is selected as the region in which the human image exists.

The dispersion values of the image-characterizing amounts are found about the vertical and horizontal lines consisting of vertical and horizontal rows, respectively, of pixels constituting the picture image in this way, for the following reason. Generally, in cases where the background is formed by a uniform or given pattern as when an evidence photograph is taken, there is a tendency that a region containing a person produces a high dispersion value of image-characterizing amount and that the background region not containing any person produces a low dispersion value of image-characterizing amount as described in detail later.

Accordingly, threshold values are set for dispersion values of image-characterizing amounts obtained about the vertical and horizontal line directions, respectively. Regions providing dispersion values in excess of their threshold values are selected. An area within the picture image in which the selected regions in the line directions overlap with each other is identified. Thus, the area within the picture image in which a human image exists can be extracted robustly and quickly.

To solve the foregoing problem, a method of extracting a candidate human image region from within a picture image in accordance with invention 2 is a method of extracting a region in which the human image exists from within the picture image containing the human image. The method starts with discerning the top-bottom direction of the human image in the picture image. Based on the result of the discernment, the picture image is rotated to correct the human image to the actual top-bottom direction. Then, dispersion values of image-characterizing amounts are found about vertical and horizontal lines, respectively, consisting of vertical and horizontal rows of pixels constituting the picture image. With respect to each of the vertical and horizontal line directions, the regions having dispersion values of image-characterizing amounts in excess of their threshold value are selected. An area in the picture image in which the selected regions in the line directions overlap with each other is extracted.

That is, in order to extract a region in which a human image exists robustly and quickly by making use of dispersion values of image-characterizing amounts as in invention 1, the premise that the top-bottom direction of the picture image that is the subject and the actual top-bottom direction are coincident must be satisfied. Therefore, in the present invention, the top-bottom direction of the human image within the picture image is first identified. The human image is modified to the actual top-bottom direction. Thus, the human face is brought into coincidence with the proper top-bottom direction.

After the modification of the position of the human face is ended in this way, the same processing as in invention 1 is subsequently carried out. That is, dispersion values of image-characterizing amounts are found about the vertical and horizontal lines, respectively, consisting of vertical and horizontal rows, respectively, of pixels constituting the picture image. Then, threshold values are set about the dispersion values of the image-characterizing amounts obtained about the vertical and horizontal line directions, respectively. Regions having values exceeding their threshold values are selected. An area within the picture image in which the selected regions in the line directions overlap with each other is identified.

Thus, the area within the picture image in which a human image exists can be extracted robustly and quickly, in the same way as in invention 1. In addition, discernment and modification of the top-bottom direction of the human image within the picture image can be made automatically and so the area in which the human image is present can be extracted with greater ease.

A method of extracting a candidate human image region from within a picture image as set forth in invention 3 is based on a method of extracting a candidate human image region from within a picture image as set forth in invention 2 and further characterized in that when the picture image is surrounded by a polygonal frame having three or more angles and the human image contained in the picture image is a part consisting chiefly of the upper half or head of a person, dispersion values of the image-characterizing values are found about rows of pixels constituting sides of the image frame or lines close to the sides, and the side providing the highest dispersion value or the side close to the line providing the highest dispersion value is taken as the ground side in discerning the top-bottom direction of the human image within the picture image.

That is, when the human image contained in the picture image that is the subject is a part consisting chiefly of the upper half or head of a person, a part of the human image is normally interrupted at any side of the image frame.

Accordingly, the dispersion values of image-characterizing amounts are found about the rows of pixels constituting the sides of the image frame or lines close to the sides. The side providing the highest dispersion value or the side close to the line providing the highest dispersion value can be regarded as a portion at which the human image is interrupted. Therefore, the top and bottom of the human image can be discerned reliably and easily by taking this side as the ground side.

A method of extracting a candidate human image region from within a picture image as set forth in invention 4 is based on a method of extracting a candidate human image region from within a picture image as set forth in invention 3 and further characterized in that plural lines in the picture image which are close to each other are selected, and that the average value of the dispersion values of the image-characterizing amounts about the lines, respectively, is used.

Consequently, if noise and contamination exist near the sides of the picture image, misdetection by their effects is avoided. A precise dispersion value of each side can be found.

A method of extracting a candidate human image region from within a picture image as set forth in invention 5 is based on a method of extracting a candidate human image region from within a picture image as set forth in any one of inventions 1 to 4 and further characterized in that every given number of lines in lateral and height directions of the picture image are used as the aforementioned vertical and horizontal lines.

The dispersion values of the image-characterizing amounts may be calculated using all the lines in the width and height directions of the picture image. Where every given number of lines are used as in the present invention, the amount of information processed to obtain dispersion values is reduced greatly and, therefore, a region in which a human image is present can be extracted more quickly.

A method of extracting a candidate human image region from within a picture image as set forth in invention 6 is based on a method of extracting a candidate human image region from within a picture image as set forth in any one of inventions 1 to 6 and further characterized in that the image-characterizing amounts are calculated based on one or both of the edge intensities and hue angles of the pixels of the rows of pixels constituting the lines.

That is, the edges of the image can be calculated quickly by making use of a well-known edge detection operator. In addition, the effects of lighting can be reduced. Therefore, if they are adopted as image-characterizing amounts, the dispersion values can be computed precisely and quickly.

On the other hand, where the difference in edge intensity between the background and the human image is small, the dispersion values can be computed precisely and quickly by using hue angles.

Furthermore, by adopting the kind of the image or both of them, if necessary, as image-characterizing amounts, the dispersion values can be calculated more precisely and quickly.

A method of extracting a candidate human image region from within a picture image as set forth in invention 7 is based on a method of extracting a candidate human image region from within a picture image as set forth in invention 6 and further characterized in that the edge intensities use a Sobel edge detection operator.

That is, the most typical method of detecting rapid variations in gray level within a picture image is to find a derivative of gradation. Since the derivative of a digital image is replaced by a difference, an edge portion across which the gradation within the picture image varies rapidly can be effectively detected by taking the first-order derivative of the image within the face detection frame.

In addition, the present invention uses a well-known Sobel edge detection operator as this first-order edge detection operator (filter), the Sobel edge detection operator being excellent in terms of detection performance. As a consequence, edges of the human image within the picture image can be detected reliably.

A system for extracting a candidate human image region from within a picture image as set forth in invention 8 is a system for extracting a region in which a human image exists from within the picture image containing the human image. The system comprises: an image reading portion for reading the picture image; an image-characterizing amount calculation portion for calculating image-characterizing amounts about vertical and horizontal lines, respectively, consisting of rows of pixels constituting the picture image read by the image reading portion; a dispersion value calculation portion for finding dispersion values of the image-characterizing amounts about vertical and horizontal line directions, respectively, obtained by the image-characterizing amount calculation portion; and a candidate human image region detection portion for detecting a region in which the human image exists from regions in the line directions having the dispersion values of the image-characterizing amounts in excess of their threshold values in the vertical and horizontal line directions, the dispersion values being obtained by the dispersion value calculation portion.

Thus, the area within the picture image in which a human image exists can be extracted robustly and quickly, in the same way as in invention 1.

These operations and effects can be automatically accomplished by realizing these portions by making use of dedicated circuits or a computer system.

A system for extracting a candidate human image region from within a picture image as set forth in invention 9 is a system for extracting a region in which a human image exists from within the picture image containing the human image. The system comprises: an image reading portion for reading the picture image; a top-bottom discerning portion for discerning a top-bottom direction of the human image within the picture image read by the image reading portion; a top-bottom modification portion for rotating the picture image based on results of the discernment done by the top-bottom discerning portion to modify the human image to an actual top-bottom direction; an image-characterizing amount calculation portion for calculating image-characterizing amounts about vertical and horizontal lines, respectively, consisting of rows of pixels constituting the picture image whose top-bottom direction has been modified by the top-bottom modification portion; a dispersion value calculation portion for finding dispersion values of the image-characterizing amounts about vertical and horizontal line directions, respectively, obtained by the image-characterizing amount calculation portion; and a candidate human image region detection portion for detecting a region in which the human image exists from regions in the line directions having the dispersion values of the image-characterizing amounts in excess of their threshold values in the vertical and horizontal line directions, the dispersion values being obtained by the dispersion value calculation portion.

Thus, the area within the picture image in which a human image exists can be extracted robustly and quickly, in the same way as in invention 2.

These operations and effects can be automatically accomplished by realizing these portions by making use of dedicated circuits or a computer system, in the same way as in invention 8.

A system for extracting a candidate human image region from within a picture image as set forth in invention 10 is based on a system for extracting a candidate human image region from within a picture image as set forth in invention 9 and further characterized in that when the picture image is surrounded by a polygonal frame having three or more angles and the human image contained in the picture image is a part consisting chiefly of the upper half or head of a person, the top-bottom discerning portion for discerning a top-bottom direction of the human image within the picture image finds dispersion values of image-characterizing amounts about sides of the picture image or lines close to the sides and takes the side providing the highest dispersion value or the side close to the line providing the highest dispersion value as the ground side.

Thus, the side at which the human image within the image frame is interrupted can be detected, in the same way as in invention 3. Therefore, the top and bottom of the human image within the picture image can be discerned reliably and easily.

A system for extracting a candidate human image region from within a picture image as set forth in invention 11 is based on a system for extracting a candidate human image region from within a picture image as set forth in invention 10 and further characterized in that the top-and-bottom discerning portion for discerning the top-bottom direction of the human image within the picture image selects plural close lines in the picture image and uses the average value of the dispersion values of image-characterizing amounts about the lines.

Consequently, if noise and contamination exist near the sides of the picture image, misdetection by their effects is avoided. A precise dispersion value of each side can be found, in the same way as in invention 4.

A system for extracting a candidate human image region from within a picture image as set forth in invention 12 is based on a system for extracting a candidate human image region from within a picture image as set forth in any one of inventions 9 to 11 and further characterized in that the image-characterizing amount calculation portion uses every given number of lines in lateral and height directions of the picture image as the vertical and horizontal lines.

Thus, the amount of information processed to obtain dispersion values is reduced greatly and so the area in which the human image is present can be extracted more quickly, in the same way as in invention 5.

A system for extracting a candidate human image region from within a picture image as set forth in invention 13 is based on a system for extracting a candidate human image region from within a picture image as set forth in any one of inventions 9 to 12 and further characterized in that the image-characterizing amount calculation portion calculates the image-characterizing amounts based on one or both of edge intensities and hue angles of the pixels of the rows of pixels constituting the lines.

Thus, the dispersion values of the image-characterizing amounts can be computed more precisely and quickly, in the same way as in invention 5.

A system for extracting a candidate human image region from within a picture image as set forth in invention 14 is based on a system for extracting a candidate human image region from within a picture image as set forth in invention 13 and further characterized in that the image-characterizing amount calculation portion calculates the edge intensities using Sobel edge detection operators.

Thus, the edge portions of the picture image can be detected reliably in the same way as in invention 7.

A program for extracting a candidate human image region from within a picture image as set forth in invention 15 is a program for extracting the region in which a human image exists from within the picture image containing the human image. The program acts to cause a computer to perform functions of: an image-characterizing amount calculation portion for calculating image-characterizing amounts about vertical and horizontal lines, respectively, consisting of rows of pixels constituting the picture image; a dispersion value calculation portion for finding dispersion values of image-characterizing amounts about vertical and horizontal line directions, respectively, obtained by the image-characterizing amount calculation portion; and a candidate human image region detection portion for detecting a region in which the human image exists from regions in the line directions having the dispersion values of the image-characterizing amounts in excess of their threshold values in the vertical and horizontal line directions, the dispersion values being obtained by the dispersion value calculation portion.

Thus, the same advantages as invention 1 can be obtained. Furthermore, the functions can be accomplished in software using a general-purpose computer (hardware) such as a personal computer. Therefore, the functions can be realized more economically and easily than where a dedicated apparatus is created and used. Furthermore, in many cases, modifications and version-ups (such as improvements) of the functions can be easily attained simply by rewriting the program.

A program for extracting a candidate human image region from within a picture image as set forth in invention 16 is a program for extracting a region in which a human image exists from within the picture image containing the human image. The program acts to cause a computer to perform functions of: a top-bottom discerning portion for discerning a top-bottom direction of the human image within the picture image; a top-bottom modification portion for rotating the picture image based on results of the discernment done by the top-bottom discerning portion to modify the human image to an actual top-bottom direction; an image-characterizing amount calculation portion for calculating image-characterizing amounts about vertical and horizontal lines, respectively, consisting of rows of pixels constituting the picture image whose top-bottom direction has been modified by the top-bottom modification portion; a dispersion value calculation portion for finding dispersion values of the image-characterizing amounts in vertical and horizontal line directions, respectively, obtained by the image-characterizing amount calculation portion; and a candidate human image region detection portion for detecting a region in which the human image exists from regions in the line directions having the dispersion values of the image-characterizing amounts in excess of their threshold values in the vertical and horizontal line directions, the dispersion values being obtained by the dispersion value calculation portion.

Thus, the same advantages as invention 2 can be obtained. Furthermore, the functions can be accomplished in software using a general-purpose computer (hardware) such as a personal computer in the same way as in invention 15. Therefore, the functions can be realized more economically and easily than where a dedicated apparatus is created and used. Furthermore, in many cases, modifications and version-ups (such as improvements) of the functions can be easily attained simply by rewriting the program.

A program for extracting a candidate human image region from within a picture image as set forth in invention 17 is based on a program for extracting a candidate human image region from within a picture image as set forth in invention 16 and further characterized in that when the picture image is surrounded by a polygonal frame having three or more angles and the human image contained in the picture image is a part consisting chiefly of the upper half or head of a person, the top-and-bottom discerning portion for discerning the top-bottom direction of the human image within the picture image finds the dispersion values of the image-characterizing amounts about the sides of the picture image or lines close to the sides and takes the side providing the highest dispersion value or the side close to the line providing the highest dispersion value as the ground side.

Thus, the same advantages as invention 3 can be obtained. Furthermore, the invention can be realized more economically and easily, in the same way as in invention 15.

A program for extracting a candidate human image region from within a picture image as set forth in invention 18 is based on a program for extracting a candidate human image region from within a picture image as set forth in invention 17 and further characterized in that the top-and-bottom discerning portion discerns the top-bottom direction of the human image within the picture image selects plural close lines in the picture image and uses the average value of the dispersion values of image-characterizing values about the lines.

Thus, precise dispersion values can be found in the same way as in invention 4. Furthermore, the invention can be accomplished more economically and easily, in the same way as in invention 15.

A program for extracting a candidate human image region from within a picture image as set forth in invention 19 is based on a program for extracting a candidate human image region from within a picture image as set forth in any one of inventions 15 to 18 and further characterized in that the image-characterizing amount calculation portion uses every given number of lines in the lateral and height directions of the picture image as the aforementioned vertical and horizontal lines.

Thus, in the same way as in invention 5, a region in which a human image is present can be extracted more quickly. Furthermore, in the same way as in invention 15, the invention can be accomplished more economically and easily.

A program for extracting a candidate human image region from within a picture image as set forth in invention 20 is based on a program for extracting a candidate human image region from within a picture image as set forth in any one of inventions 15 to 19 and further characterized in that the image-characterizing amount calculation portion calculates the image-characterizing amounts based on any one or both of the edge intensities and hue angles of the pixels in the rows of pixels constituting the lines.

Thus, in the same way as in invention 6, the dispersion values of the image-characterizing amounts can be calculated more precisely and quickly. Furthermore, in the same way as in invention 15, the invention can be accomplished more economically and easily.

A program for extracting a candidate human image region from within a picture image as set forth in invention 21 is based on a program for extracting a candidate human image region from within a picture image as set forth in invention 20 and further characterized in that the image-characterizing amount calculation portion calculates the edge intensities using Sobel edge detection operators.

Thus, in the same way as in invention 7, the edge portions of the picture image can be detected reliably. Furthermore, the program can be realized more economically and easily, in the same way as in invention 15.

A method of discerning top-bottom direction of a human image as set forth in invention 22 is a method of discerning the top-bottom direction of a human image within a picture image in which the human image is present within a polygonal frame having three or more angles, the human image consisting chiefly of the upper half or head of a person. The method starts with finding the dispersion values of image-characterizing amounts of rows of pixels constituting the sides of the picture image or lines close to the sides. The side providing the highest dispersion value or the side close to the line providing the highest dispersion value is identified as the ground side.

That is, in the case of a picture image in which a human image consisting chiefly of the upper half or head of a person exists within a polygonal frame having three or more angles, a part of the human image is normally interrupted at any side of the image frame.

Accordingly, the dispersion values of image-characterizing amounts are found about the rows of pixels forming the sides of the image frame or lines close to the sides. The side providing the highest dispersion value or the side close to the line providing the highest dispersion value can be regarded as a portion at which the human image is interrupted.

Therefore, the top and bottom of the human image can be discerned reliably and easily by taking the side at which the human image is interrupted as the ground side.

A system for discerning top-bottom direction of a human image as set forth in invention 23 is a system for discerning the top-bottom direction of the human image within a picture image in which a human image consisting chiefly of the upper half or head of a person exists within a polygonal frame having three or more angles. The system comprises: a dispersion value calculation portion for calculating dispersion values of image-characterizing amounts of rows of pixels forming the sides of the picture image or lines close to the sides; and a top-and-bottom discerning portion for identifying the side providing the highest dispersion value or the side close to the line providing the highest dispersion value as the ground side, the highest dispersion value being obtained by the dispersion value calculation portion.

Thus, in the same way as in invention 22, the top and bottom of the human image can be discerned reliably and easily. Furthermore, the discernment can be done automatically by realizing the processing by making use of dedicated circuits or a computer system.

A program for discerning top-bottom direction of a human image as set forth in invention 24 is a program for discerning the top-bottom direction of the human image within a picture image in which the human image consisting chiefly of the upper half or head of a person exists within a polygonal frame having three or more angles. The program acts to cause a computer to perform functions of: a dispersion value calculation portion for calculating dispersion values of image-characterizing amounts of rows of pixels constituting the sides of the picture image or lines close to the sides; and a top-and-bottom discerning portion for identifying the side providing the highest dispersion value or the side close to the line providing the highest dispersion value as the ground side, the highest dispersion value being obtained by the dispersion value calculation portion.

Thus, in the same way as in invention 22, the top and bottom of the human image can be discerned reliably and easily. Furthermore, the functions can be realized in software using a general-purpose computer (hardware) such as a personal computer. Therefore, the functions can be more economically and easily accomplished than where a dedicated apparatus is created and used. Furthermore, in many cases, modifications and version-ups (such as improvements) of the functions can be easily attained simply by rewriting the program.

### [Brief Description of the Drawings]

[Fig. 1] Fig. 1 is a block diagram showing one embodiment of a system for extracting a candidate human image region in accordance with the present invention.
[Fig. 2] Fig. 2 is a schematic view showing hardware that can be used in the system of the present invention.
[Fig. 3] Fig. 3 is a flowchart showing flow of processing of the method of extracting a candidate human image region in accordance with the invention.
[Fig. 4] Fig. 4 is a view showing one example of a picture image from which a candidate human image is to be extracted.
[Fig. 5] Fig. 5 is a diagram illustrating Sobel operators.
[Fig. 6] Fig. 6 is a diagram showing variations in the dispersion values of image-characterizing amounts of each line in the vertical and horizontal directions.
[Fig. 7] Fig. 7 is a conceptual diagram showing a state in which regions having dispersion values in excess of their threshold values overlap with each other.

### [Best Mode for Carrying Out the Invention]

The best mode for carrying out the present invention is hereinafter described in detail with reference to the accompanying drawings.

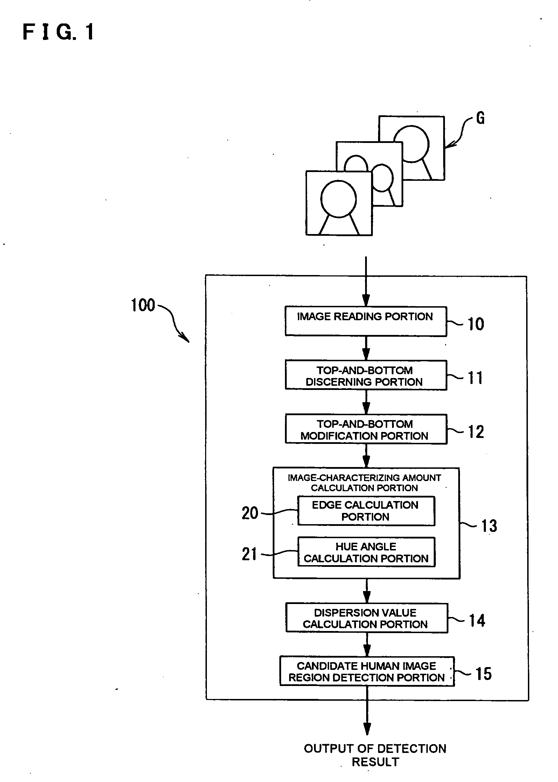

Fig. 1 shows one embodiment of a system 100 for extracting a candidate human image region from within a picture image, the system being associated with the present invention.

As shown, this system 100 for extracting a candidate human image region consists principally of an image reading portion 10 for reading a picture image G from which a candidate human image region is to be extracted, a top-and-bottom discerning portion 11 for discerning the top-bottom direction of a human image within the picture image G read by the image reading portion 10, a top-and-bottom modification portion 12 for modifying the human image to the actual top-bottom direction based on the result obtained by the top-and-bottom discerning portion 11, an image-characterizing amount calculation portion 13 for calculating the image-characterizing amount of the picture image G whose top-bottom direction has been modified by the top-and-bottom modification portion 12, a dispersion amount calculation portion 14 for finding the dispersion value of the image-characterizing amount obtained by the image-characterizing amount calculation portion 13, and a candidate human image region detection portion 15 for detecting a region in which the human image exists based on the dispersion value of the image-characterizing amount obtained by the dispersion amount calculation portion 14.

First, the image reading portion 10 provides a function of reading the picture image G as digital image data consisting of pixel data sets about R (red), G (green), and B (blue) by making use of an image sensor such as a CCD (charge-coupled device) image sensor or CMOS (complementary metal oxide semiconductor) image sensor and accepting the data sets. Examples of the image G include an evidence photograph (such as for a passport or a driver's license) and some snapshots in which the background is uniform or does not vary complexly. The image G includes a rectangular frame within which a human image consisting chiefly of the upper half or head of a person is contained.

In particular, the reading portion is a CCD camera or CMOS camera (such as a digital still camera or digital video camera), vidicon camera, image scanner, drum scanner, or the like. The reading portion offers functions of converting the analog facial image G optically read into the image sensor into digital form and sending the digital image data to the top-and-bottom discerning portion 11 in succession.

The image reading portion 10 is fitted with a function of storing data, and can appropriately store the facial image data read in onto a storage device such as a hard disk drive (HDD) or a storage medium such as a DVD-ROM. Where the image G is supplied as digital image data via a network, storage medium, or the like, the image reading portion 10 is dispensed with or functions as a communications means (such as a DCE (data circuit terminating equipment), CCU (communication control unit), or CCP (communication control processor)) or interface (I/F).

The top-and-bottom discerning portion 11 provides a function of discerning the top-bottom direction of the picture image G having a polygonal image frame within which a human image is present. The polygonal image frame has three or more angles. The human image consists chiefly of the upper half or head of a person. The discerning portion detects one side of the image frame at which the human image is interrupted. This side is taken as the ground side. Thus, the top-bottom direction of the image G is discerned.

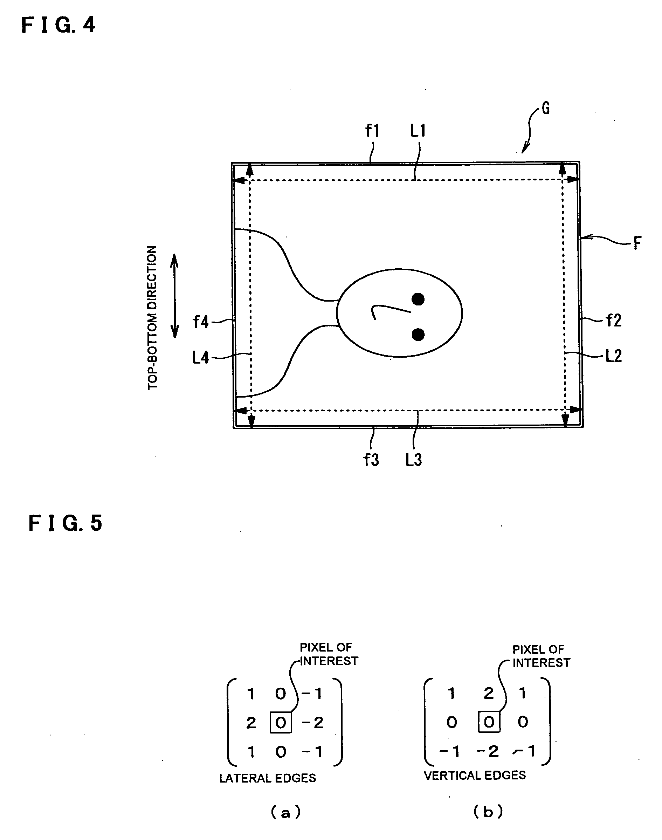

For example, where the picture image G read by the image reading portion 10 has a rectangular image frame F within which a human image consisting of the upper half of a person, or substantially over the chest, exists as shown in Fig. 4, the top-bottom direction of the human image is discerned based on the dispersion values of image-characterizing amounts obtained from rows of pixels forming the four sides f1, f2, f3, f4 of the image frame F or four lines L1, L2, L3, L4 established close to the sides. A specific method of calculating the dispersion values of the image-characterizing amounts obtained from the rows of pixels forming the sides of the image frame F or the lines established close to the sides is described in detail later.

The top-and-bottom modification portion 12 provides a function of modifying the human image to the actual top-bottom direction based on the result of the discernment done by the top-and-bottom discerning portion 11. For example, in the embodiment of Fig. 4, the whole image G is rotated through 90° in a counterclockwise direction or 270° in a clockwise direction such that the left side, i.e., the side f4, on the side of which the human image is interrupted, is on the ground side. Thus, a modification is made to bring the top-bottom direction into coincidence with the actual top-bottom direction.

The image-characterizing amount calculation portion 13 provides a function of calculating the image-characterizing amounts of pixels forming the picture image G whose top-bottom direction has been modified by the top-and-bottom modification portion 12. In particular, one or both of the edge intensities and hue angles of the pixels of the rows of pixels constituting the vertical and horizontal lines consisting of vertical and horizontal rows of pixels are detected by the edge calculation portion 20 or hue angle calculation portion 21. Based on the detected values, the image-characterizing amounts of the pixels are computed.

The dispersion amount calculation portion 14 provides a function of finding the dispersion values of the image-characterizing amounts obtained by the image-characterizing amount calculation portion 13. A specific example is described later.

The candidate human image region detection portion 15 provides a function of detecting a region in which a human image exists based on the dispersion values of the image-characterizing amounts obtained by the dispersion value calculation portion 14. The detection portion selects regions providing image-characterizing amounts having dispersion values in excess of their threshold values about the vertical and horizontal line directions, respectively, and extracts an area within the picture image in which the selected regions in the line directions overlap with each other as a region in which the human image exists.

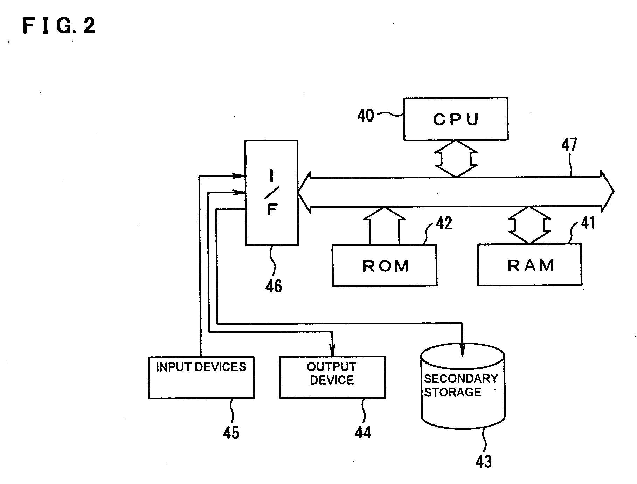

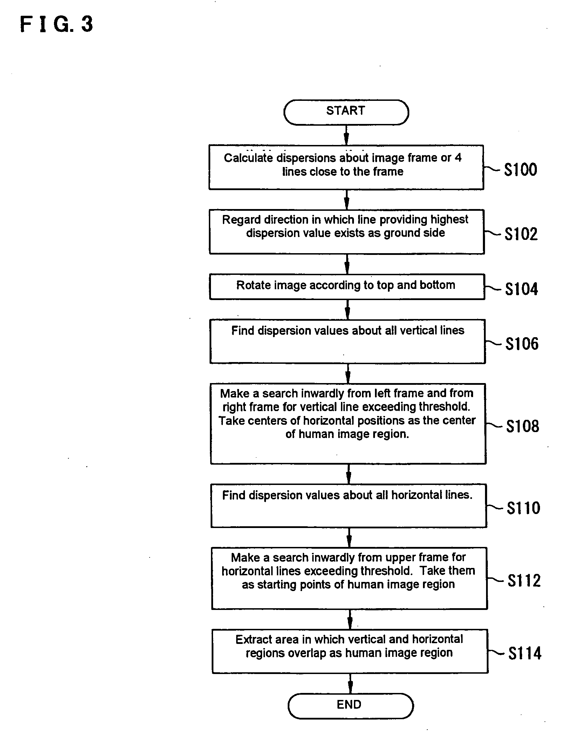

The portions 10, 11, 12, 13, 14, 15, and so on constituting the system 100 for extracting a candidate human image region in accordance with the present invention described so far are realized in practice by a computer system, such as a personal computer, consisting of hardware made up of a CPU, a RAM, and so on as shown in Fig. 2 and a dedicated computer program (software) describing an algorithm as shown in Fig. 3 and other figures.

That is, as shown in Fig. 2, the hardware for realizing the candidate human image region extraction system 100 consists of a CPU (central processing unit) 40 that performs various control operations and arithmetic operations, the RAM (random access memory) 41 used in a main storage, a ROM (read-only memory) 42 that is a storage device for reading purposes only, a secondary storage 43 such as a hard disk drive (HDD) or semiconductor memory, an output device 44 such as a monitor (e.g., an LCD (liquid-crystal display) or a CRT (cathode-ray tube)), input devices 45 consisting of an image scanner, a keyboard, a mouse, and an image sensor (such as CCD (charge-coupled device) image sensor or CMOS (complementary metal oxide semiconductor) image sensor), input/output interfaces (I/F) 46 for the devices, and various internal and external buses 47 connecting the input/output interfaces. The buses 47 include processor buses consisting of PCI (peripheral component interconnect) or ISA (industrial standard architecture) buses, memory buses, system buses, and input/output buses.

Various programs for controlling purposes and data are installed into the secondary storage 43 or the like. The programs and data are supplied via a storage medium such as a CD-ROM, DVD-ROM, or flexible disk (FD) or via a communications network (such as LAN, WAN, or Internet) N.

If necessary, the programs and data are loaded into the main storage 41. According to the programs loaded in the main storage 41, the CPU 40 makes full use of various resources to perform given control and arithmetic processing. The results of the processing (i.e., processed data) are output to the output device 44 via the buses 47 and displayed. If necessary, the data are appropriately stored in a database created by the secondary storage 43 or the database is updated.

One example of the method of extracting a candidate human image region using the system 100 constructed in this way for extracting a candidate human image region in accordance with the present invention is next described with reference to Figs. 4-7.

Fig. 3 is a flowchart illustrating one example of flow of processing regarding extraction of a candidate human image region, the processing being according to the present invention.

First, if the subject image G is read by the image reading portion 11, as illustrated in the first step S100, the image-characterizing amounts of the pixels forming the sides constituting the image frame of the image G or lines close to the sides are calculated. Furthermore, the dispersion values of the image-characterizing amounts are computed. For example, where the image G read by the image reading portion 11 has a rectangular image frame F as shown in Fig. 4, the frame F consists of four sides f1, f2, f3, and f4 and so image-characterizing amounts based on one or both of the edge intensities and hue angles are calculated about the pixels forming the four sides f1, f2, f3, and f4 or about the pixels forming lines L1, L2, L3, and L4 which are close to the sides f1, f2, f3, f4 and extend parallel to the sides f1, f2, f3, f4.

The "edge intensities" and "hue angles" referred to herein have the same meanings as generally defined in the image processing field.

That is, each edge intensity can be easily calculated, for example, by previously calculating the brightness (Y) of each pixel and using a well-known first-order derivative (differential type) edge detection operator typified by a Sobel edge detection operator and based on the brightness value.

In Fig. 5, (a) and (b) show such Sobel edge detection operators. The operator (filter) shown in (a) of Fig. 5 enhances the horizontal edges by adjusting the values of three pixels located on the left and right columns out of the values of 8 pixels surrounding a pixel of interest. The operator shown in (b) of Fig. 5 enhances the vertical edges by adjusting the values of three pixels located on the upper row and lower column out of the values of 8 pixels surrounding the pixel of interest. In this way, the vertical and horizontal edges are detected. The sum of the squares of the results produced by the operators is taken. Then, the root square of the sum is taken. As a result, the edge intensity can be found. Furthermore, instead of the Sobel operators, other first-order derivative edge detection operators such as Roberts and Prewitt operators can be used.

Meanwhile, the hue angle is an attribute indicating a color difference. The "hue angle" is the angle to the position of the color of the hair with respect to the background color when a color index chart such as the Munsell hue circle or Munsell color solid is used. For example, according to the Munsell hue circle, in a case where the reference background color is blue, it follows that with respect to the hair color, yellow and red have greater hue angles than green, i.e., have greater image-characterizing amounts.

After the image-characterizing amounts about the pixels forming the sides f1, f2, f3, f4 or the lines L1, L2, L3, L4 close to the sides are calculated in this way, the dispersion values of the image-characterizing amounts of the sides f1, f2, f3, f4, respectively, or the lines L1, L2, L3, L4, respectively, close to the sides are calculated.

Then, the program goes to step S102, where that of the sides f1, f2, f3, f4 or lines L1, L2, L3, L4 close to them which provides an image-characterizing amount having the highest one of the calculated dispersion values is selected. The portion at which the side or line is present is regarded as the ground side.

In the embodiment of Fig. 4, the sides f1, f2, f3, f4 or lines L1, L2, L3, and L4 close to the sides are made of uniform or little varying background except for the side f4 or line L4. A part (chest) of the person touches the side f4 or line L4. Therefore, the dispersion value of the image-characterizing amount of the side f4 or line L4 is highest. As a result, the side f4 or line L4 at the left side of the figure is regarded as the ground side.

After the top-bottom direction of the picture image G from which a candidate human image region is extracted is discerned in this way, the program goes to step S104, where the image G is rotated according to the top-bottom direction.

In the embodiment of Fig. 4, the side f4 or the side of the line L4 is regarded as the ground side. Therefore, the picture image G is rotated through 90° in a counterclockwise direction or 270° in a clockwise direction such that the side f4 or the side of the line L4 faces the actual ground side as indicated by the arrows.

After rotating the picture image G and bringing its top-bottom direction into agreement with the actual top-bottom direction in this way, the program proceeds to the next step S106, where the dispersion values of the image-characterizing amounts are found about all the vertical lines.

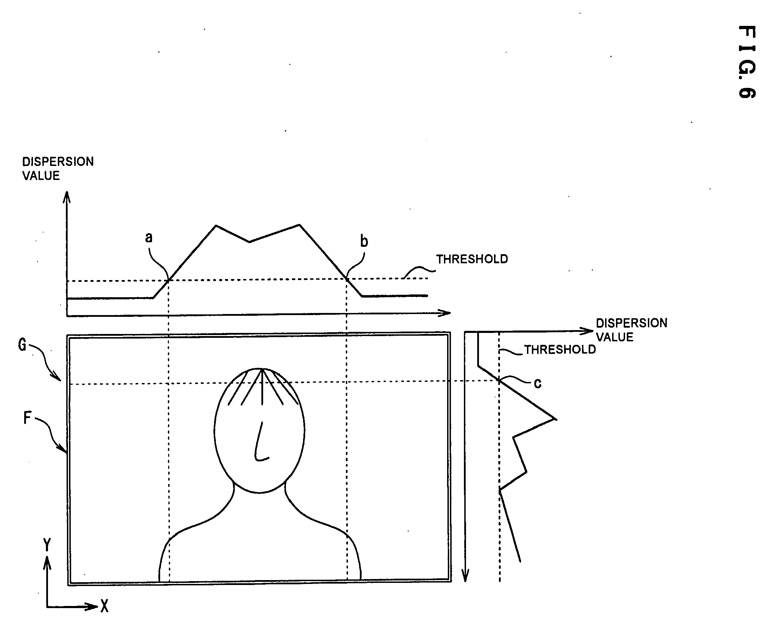

For example, where the picture image G consists of 300 pixels (vertical)(Y-direction) × 500 pixels (horizontal) (X-direction) as shown in Fig. 6, the dispersion value of the image-characterizing amount of each vertical line consisting of 300 pixels in a vertical row is calculated. Therefore, the dispersion values of the 500 vertical lines in total are computed.

After calculating the dispersion values of the image-characterizing amounts of all the vertical lines in this way, the program goes to the next step S108, where a threshold value is set for the dispersion values. A search is made inwardly for vertical lines having values in excess of the threshold value from the left side (left frame portion) of the image G and from the right side (right frame portion) in turn. Regions having values exceeding the threshold value are regarded as candidate human image regions. The center of their horizontal positions is regarded as the center of the candidate human image regions.

In the embodiment of Fig. 6, a search is made inwardly from the left side (left frame portion) and from the right side (right frame portion) in turn. As a result, the threshold value is exceeded at points a and b. In the vertical direction, the interval between the points a and b is identified as a candidate human image region. Furthermore, the midpoint between the points a and b is identified as the center of the human image.

After the candidate human image region is identified in the vertical direction in this way, the program goes to the next step S110, where the dispersion values regarding all the horizontal lines are found at this time in the same way as in the foregoing processing. In the embodiment of Fig. 6, 300 pixels are arrayed in the vertical direction and so it follows that the dispersion values are found regarding 300 horizontal lines in total.

After finding the dispersion values regarding all the horizontal lines in this way, a threshold value is set for the dispersion values in the same way as in the above-described step S108. The program goes to the next step S112. A search is made downwardly from the upper side (upper frame portion) of the image G about horizontal lines exceeding the threshold value. The lower region exceeding the threshold value is regarded as a candidate human image region.

In the embodiment of Fig. 6, a search is performed downwardly from the upper side (upper frame side) in turn. As a result, the threshold value is exceeded at point c. Therefore, the region lower than the point c is identified as a candidate human image region in the horizontal direction. Furthermore, the neighborhood of the point c is identified as the top of the human image, i.e., head top. As mentioned previously, in this image G, the region into which a part of the human image extends is always located on the ground side. Therefore, it is not necessary to make a search from the lower side.

The program then goes to the next step S114. If regions exceeding the dispersion values in the vertical and horizontal directions, respectively, are identified, an area in which these regions overlap with each other is identified. Thus, this area can be extracted as a candidate human image region.

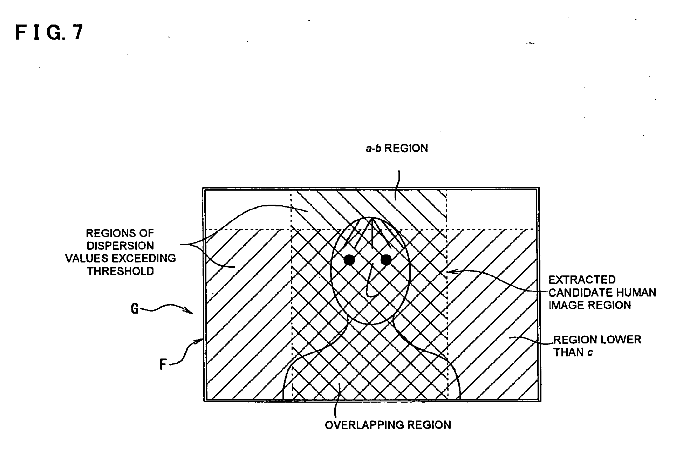

In the embodiment of Fig. 6, an area in which *a-b* region and the region lower than c overlap with each other is extracted as a candidate human image region as shown in Fig. 7.

A region where a person exists produces a high dispersion value of image-characterizing amount. A background region in which no person exists produces a low dispersion value of image-characterizing amount. The present invention discerns the top-bottom direction of the image in this way by making use of the tendency as described above. Each region having a dispersion value exceeding the threshold value is selected. An area within the picture image in which the selected regions in the line directions overlap with each other is extracted as a candidate human image region. Therefore, the top-bottom direction of the picture image G can be modified, of course. In addition, a region within the picture image G in which a human image exists can be extracted robustly and quickly.

In the present embodiment, a case of the picture image G having the rectangular image frame F has been described. Even in cases of triangular image frame F and polygonal image frames having more angles, their top-bottom directions can be easily discerned and a candidate human image can be extracted by a similar technique. Furthermore, in cases of image frames F in the form of a genuine circle or eclipse, if the outer periphery is regularly divided and a decision is made, the top-bottom direction can be discerned and a candidate human image region can be extracted, in the same way as in the case of the polygonal image frame F.

Additionally, no limitations are placed on the specific method of establishing the threshold value. Where a distinct difference in dispersion value of image-characterizing amount is observed between the background portion and human image portion as shown in Fig. 6, if the threshold value is set to a lower value, a candidate human image region may be extracted more precisely. However, where no distinct difference is observed because an object other than a person is in the background or for other reason, it is necessary to set the threshold value to a higher value. It is considered that a normal appropriate threshold value is obtained by adding about one quarter (1/4) of the maximum dispersion value to a dispersion value obtained near the image frame.

Where edge intensities are used as image-characterizing amounts, high-speed calculations are enabled. In addition, the effects of illumination can be reduced. However, where an object other than a person is in the background and the difference in edge intensity between the background and the person is small, it is not appropriate to use edge intensities. Therefore, in such cases, use of hue angles can contribute more certainly to extraction of a candidate human image region.

With respect to the lines used for discernment of the top and bottom, if one line is available for each side, then the discernment can be done. Plural lines may be selected and the average value of the dispersion values of the lines may be used by taking account of noise and contamination in the image G. Where a candidate human image region is extracted, all the lines may be used. In addition, where some lines (e.g., every given number of lines) are appropriately used, the amount of calculation for dispersion values is reduced accordingly and greatly though the accuracy is somewhat inferior. Hence, a candidate human image region can be extracted more quickly.

Furthermore, in the present embodiment, discernment of the top-bottom direction of a human image within a picture image and a modification to it are done prior to extraction of the human image region. In cases where the top-bottom directions of the subject human images within a picture image are all coincident with the actual top-bottom direction, it is, of course, possible to omit these processing steps of discernment and modification.

## Claims

1. A method of extracting a candidate human image region from within a picture image containing a human image, said method comprising the steps of:
finding dispersion values of image-characterizing amounts about vertical and horizontal lines, respectively, consisting of vertical and horizontal rows of pixels constituting said picture image;
selecting regions having dispersion values of image-characterizing amounts in excess of their threshold values about vertical and horizontal line directions, respectively; and
extracting an area within the picture image in which the selected regions in the line directions overlap with each other as the region in which the human image exists.

2. A method of extracting a candidate human image region from within a picture image containing a human image, said method comprising the steps of:
discerning a top-bottom direction of the human image within said picture image;
rotating said picture image based on results of the discernment to modify said human image to an actual top-bottom direction;
then finding dispersion values of image-characterizing amounts about vertical and horizontal lines, respectively, consisting of vertical and horizontal rows of pixels constituting said picture image;
selecting regions having dispersion values of image-characterizing amounts in excess of their threshold values about vertical and horizontal line directions, respectively; and
extracting an area within the picture image in which the selected regions in the line directions overlap with each other as the region in which the human image exists.

3. A method of extracting a candidate human image region from within a picture image as set forth in claim 2, wherein when said picture image is surrounded by a polygonal frame having three or more angles and the human image contained in said picture image is a part consisting chiefly of the upper half or head of a person, dispersion values of the image-characterizing values are found about rows of pixels constituting sides of the image frame or lines close to the sides and the side providing the highest dispersion value or the side close to the line providing the highest dispersion value is taken as a ground side in discerning the top-bottom direction of the human image within said picture image.

4. A method of extracting a candidate human image region from within a picture image as set forth in claim 3, wherein plural lines in said picture image which are close to each other are selected, and wherein an average value of dispersion values of image-characterizing values about the lines, respectively, is used.

5. A method of extracting a candidate human image region from within a picture image as set forth in any one of claims 1 to 4, wherein every given number of lines in lateral and height directions of said picture image are used as said vertical and horizontal lines.

6. A method of extracting a candidate human image region from within a picture image as set forth in any one of claims 1 to 5, wherein said image-characterizing amounts are calculated based on one or both of edge intensities and hue angles of the pixels of the rows of pixels constituting said lines.

7. A method of extracting a candidate human image region from within a picture image as set forth in claim 6, wherein said edge intensities use a Sobel edge detection operator.

8. A system for extracting a candidate human image region from within a picture image containing a human image, said system comprising:
an image reading portion for reading said picture image;
an image-characterizing amount calculation portion for calculating image-characterizing amounts about vertical and horizontal lines, respectively, consisting of rows of pixels constituting the picture image read by said image reading portion;
a dispersion value calculation portion for finding dispersion values of the image-characterizing amounts about vertical and horizontal line directions, respectively, obtained by said image-characterizing amount calculation portion; and
a candidate human image region detection portion for detecting a region in which the human image exists from regions in the line directions having the dispersion values of the image-characterizing amounts in excess of their threshold values in the vertical and horizontal line directions, the dispersion values being obtained by said dispersion value calculation portion.

9. A system for extracting a candidate human image region from within a picture image containing a human image, said system comprising:
an image reading portion for reading said picture image;
a top-bottom discerning portion for discerning a top-bottom direction of the human image within the picture image read by said image reading portion;
a top-bottom modification portion for rotating said picture image based on results of the discernment done by said top-bottom discerning portion to modify said human image to an actual top-bottom direction;
an image-characterizing amount calculation portion for calculating image-characterizing amounts about vertical and horizontal lines, respectively, consisting of rows of pixels constituting the picture image whose top-bottom direction has been modified by said top-bottom modification portion;
a dispersion value calculation portion for finding dispersion values of the image-characterizing amounts about vertical and horizontal line directions, respectively, obtained by said image-characterizing amount calculation portion; and
a candidate human image region detection portion for detecting a region in which the human image exists from regions in the line directions having the dispersion values of the image-characterizing amounts in excess of their threshold values in the vertical and horizontal line directions, the dispersion values being obtained by said dispersion value calculation portion.

10. A system for extracting a candidate human image region from within a picture image as set forth in claim 9, wherein when the picture image is surrounded by a polygonal frame having three or more angles and the human image contained in the picture image is a part consisting chiefly of the upper half or head of a person, the top-bottom discerning portion for discerning a top-bottom direction of the human image within said picture image finds dispersion values of image-characterizing amounts about sides of the picture image or lines close to the sides and takes the side providing the highest dispersion value or the side close to the line providing the highest dispersion value as a ground side.

11. A program for extracting a candidate human image region from within a picture image containing a human image by causing a computer to perform functions of:
a top-bottom discerning portion for discerning a top-bottom direction of the human image within said picture image;
a top-bottom modification portion for rotating said picture image based on results of the discernment done by said top-bottom discerning portion to modify said human image to an actual top-bottom direction;
an image-characterizing amount calculation portion for calculating image-characterizing amounts about vertical and horizontal lines, respectively, consisting of rows of pixels constituting the picture image whose top-bottom direction has been modified by said top-bottom modification portion;
a dispersion value calculation portion for finding dispersion values of the image-characterizing amounts about vertical and horizontal line directions, respectively, obtained by said image-characterizing amount calculation portion; and
a candidate human image region detection portion for detecting a region in which the human image exists from regions in the line directions having the dispersion values of the image-characterizing amounts in excess of their threshold values in the vertical and horizontal line directions, the dispersion values being obtained by said dispersion value calculation portion.

12. A program for extracting a candidate human image region from within a picture image as set forth in claim 11, wherein when said picture image is surrounded by a polygonal frame having three or more angles and the human image contained in said picture image is a part consisting chiefly of the upper half or head of a person, the top-bottom discerning portion for discerning a top-bottom direction of the human image within said picture image finds dispersion values of image-characterizing amounts about sides of the picture image or lines close to the sides and takes the side providing the highest dispersion value or the side close to the line providing the highest dispersion value as a ground side.

13. A method of discerning a top-bottom direction of a human image within a picture image in which the human image exists within a polygonal frame having three or more angles, the human image consisting chiefly of the upper half or head of a person, said method comprising the steps of:
finding dispersion values of image-characterizing amounts of rows of pixels constituting sides of said picture image or lines close to the sides; and
identifying the side providing the highest dispersion value or the side close to the line providing the highest dispersion value as a ground side.

14. A system for discerning top-bottom direction of a human image within a picture image containing the human image within a polygonal frame having three or more angles, the human image consisting chiefly of the upper half or head of a person, said system comprising:
a dispersion value calculation portion for calculating dispersion values of image-characterizing amounts of rows of pixels forming sides of said picture image or lines close to the sides; and
a top-and-bottom discerning portion for identifying the side providing the highest one of the dispersion values obtained by said dispersion value calculation portion or the side close to the line providing the highest one of the dispersion values obtained by said dispersion value calculation portion as a ground side.

15. A program for discerning top-bottom direction of a human image within a picture image containing the human image within a polygonal frame having three or more angles, the human image consisting chiefly of the upper half or head of a person, said program comprising causing a computer to perform functions of:
a dispersion value calculation portion for calculating dispersion values of image-characterizing amounts of rows of pixels forming sides of said picture image or lines close to the sides; and
a top-and-bottom discerning portion for identifying the side providing the highest one of the dispersion values obtained by said dispersion value calculation portion or the side close to the line providing the highest one of the dispersion values obtained by said dispersion value calculation portion as a ground side.

## Amended claims

### Amended claims under Art. 19.1 PCT

1. A method of extracting from a picture image containing a human image the region occupied by the human image, the method comprising the steps of:
a picture image reading step for reading the picture image;
a top-bottom discerning step for discerning the top-bottom direction of the human image within the picture image read by the picture image reading step;
a top-bottom modifying step for rotating the picture image based on results of the discernment of the top-bottom discerning step so as to modify the human image to be in the actual top-bottom direction;
an image feature amount calculating step for calculating the image feature amounts of the respective vertical and horizontal lines of the pixels constituting the picture image whose top-bottom direction has been modified by the top-bottom modifying step;
a dispersion value calculating step for respectively obtaining dispersion values of the image feature amounts in the vertical line direction and in the horizontal line direction obtained in the image feature amount calculating step; and
a human image region extracting step of selecting regions having the respective dispersion values of the image feature amount along the vertical and horizontal line directions, obtained in the dispersion value calculating step, in excess of their threshold values, and extracting regions within the picture image in which the selected regions in the respective line directions overlap with each other,
wherein, when the picture image is surrounded by a polygonal frame having three or more angles and the human image contained in the picture image is a part of the human body consisting chiefly of the upper half or head of a person, the top-bottom discerning step finds the respective dispersion values of the image feature amounts with respect to rows of pixels constituting lines of the sides of the image frame or lines close to the sides, and judges the side having the highest dispersion value or the side close to the line having the highest dispersion value to be the ground direction.

2. A method of extracting the human image region from the picture image as set forth in claim 1, wherein the top-bottom discerning step selects plural neighboring lines of pixels constituting a side of the image frame or lines close to a side, and discerns the top and the bottom by use of the average values of the dispersion values of the image feature amounts of the respective pixel rows.

3. A method of extracting the human image region from a picture image as set forth in either claim 1 or 2, wherein the image feature amount calculating step uses lines at a set interval from each other in lateral and height directions of the picture image as the vertical and horizontal lines for which the image feature amounts are calculated.

4. A system for extracting from a picture image containing a human image the region occupied by the human image, the system comprising:
a picture image reading means for reading the picture image;
a top-bottom discerning means for discerning the top-bottom direction of the human image in the picture image read by the picture image reading means;
a top-bottom modifying means for rotating the picture image based on results of the discernment by the top-bottom discerning means so as to modify the human image to be in the actual top-bottom direction;
an image feature amount calculating means for calculating the respective image feature amounts of vertical and horizontal lines of pixels constituting the picture image modified in the top-bottom direction by the top-bottom modifying means;
a dispersion value calculating means for obtaining respective dispersion values of the image feature amounts along the vertical and horizontal lines obtained in the image feature amount calculating step; and
a human image region extracting means for extracting the human image region from the respective regions of the dispersion values of the image feature amount in the vertical and horizontal directions which are in excess of the threshold values;
wherein, when the picture image is surrounded by a polygonal frame having three or more angles and the human image contained in the picture image is a part of the human body consisting chiefly of the upper half or head of a person, the top-bottom discerning means finds the respective dispersion values of the image-characterizing values along rows of pixels constituting the sides of the image frame or lines close to the sides, and judges the ground direction to be the side having the highest dispersion value or the side close to the line having the highest dispersion value.

5. A system for extracting the human image region from a picture image containing a human image as set forth in claim 4, wherein the top-bottom discerning means selects plural neighboring lines of pixels constituting the respective sides of the image frame or lines close to the respective sides, and discerns the top and the bottom by use of the average values of the dispersion values of the image feature amounts along the respective pixel rows.

6. A system of extracting the human image region from a picture image as set forth in any one of claim 4 or 5, wherein the image feature amount calculating means uses lines in lateral and height directions of the picture image at a set interval from each other as the vertical and horizontal lines for which the image feature amounts are calculated.

7. A program for extracting from a picture image containing a human image the region occupied by the human image, the program
causing the computer to function as:
a picture image reading means for reading the picture image;
a top-bottom discerning means for discerning the top-bottom direction of the human image in the picture image read by the picture image means;
a top-bottom modifying means for rotating the picture image based on results of the discernment of the top-bottom discerning means so as to modify the human image to be in the actual top-bottom direction;
an image feature amount calculating means for calculating the respective image feature amounts of vertical and horizontal lines of pixels constituting the picture image modified in the top-bottom direction by the top-bottom modifying means;
a dispersion value calculating means for obtaining dispersion values of the respective image feature amounts along the vertical and horizontal lines obtained in the image feature amount calculating means; and
a human image region detecting means for detecting the human image region from the respective regions of the dispersion values of the image feature amount in the vertical and horizontal directions which are in excess of the threshold values dispersion as determined by the value calculating means;
wherein, when the picture image is surrounded by a polygonal frame having three or more angles and the human image contained in the picture image is a part of the human body consisting chiefly of the upper half or head of a person, the top-bottom discerning means is caused to function to find the dispersion values of the image feature amounts along rows of pixels constituting the respective sides of the image frame or the lines close to the respective sides, and to take, as a ground direction, the side having the highest dispersion value or the side close to the line having the highest dispersion value.

8. A program for extracting a human image region from a picture image as set forth in claim 7, wherein the top-bottom discerning means is caused to select plural neighboring lines of pixels constituting the respective sides of the image frame or lines close to the sides, and to discern the top and the bottom by use of the average values of the dispersion values of the image feature amounts of the respective pixel rows.

9. A program for extracting a candidate human image region from a picture image as set forth in any one of claim 7 or 8, wherein the image feature amount calculating means is caused to use lines in lateral and height directions of the picture image at a set interval from each other as the vertical and horizontal lines for which the image feature amounts are calculated.
